Europäisches Patentamt

European Patent Office

Office européen des brevets

(19)

(11) **EP 0 555 853 B1**

(12) **EUROPÄISCHE PATENTSCHRIFT**

(45) Veröffentlichungstag und Bekanntmachung des
Hinweises auf die Patenterteilung:
**21.10.1998 Patentblatt 1998/43**

(51) Int. Cl.⁶: **B65H 23/02**

(21) Anmeldenummer: **93102162.0**

(22) Anmeldetag: **11.02.1993**

(54) **Verfahren zum Einstellen eines die Bahnkante einer laufenden Materialbahn berührungsfrei erfassenden Fühlers**

Method for adjusting a non-contact sensor detecting the web edge of a running material web

Méthode pour ajuster un capteur détectant sans contact le bord d'une bande courante de matériau

(84) Benannte Vertragsstaaten:
**AT BE CH DE DK ES FR GB IT LI NL SE**

(30) Priorität: **11.02.1992 DE 4203947**

(43) Veröffentlichungstag der Anmeldung:
**18.08.1993 Patentblatt 1993/33**

(73) Patentinhaber:
**BST SERVO-TECHNIK GmbH
D-33507 Bielefeld (DE)**

(72) Erfinder:
• **Schrauwen, Hans Joachim
W-4901 Hiddenhausen 5 (DE)**

• **Nacke, Theodor
W-4817 Leopoldshöhe (DE)**
• **Bettführ, Jürgen, Dipl.-Ing.
W-4973 Vlotho (DE)**

(74) Vertreter:
**Klingseisen, Franz, Dipl.-Ing. et al
Patentanwälte,
Dr. F. Zumstein,
Dipl.-Ing. F. Klingseisen,
Bräuhausstrasse 4
80331 München (DE)**

(56) Entgegenhaltungen:
**EP-A- 0 367 368            DE-A- 2 449 171**

## Beschreibung

Die Erfindung betrifft ein Verfahren zum Einstellen eines die Bahnkante einer laufenden Materialbahn berührungsfrei erfassenden Fühlers für eine Bahnlaufregeleinrichtung.

Bei der Bahnlaufregelung von unterschiedlich transparenten Materialbahnen mittels eines optischen Fühlers ergeben sich in Abhängigkeit von der Transparenz des Materials unterschiedschiedliche Signalhübe des Fühlers zwischen Hellwert H ( bei vollständig freiliegendem Fühler) und Dunkelwert D (von der betreffenden Materialbahn vollständig abgedecktem Fühler). Bei bekannten Bahnlaufregeleinrichtungen sind deshalb bei einem Materialwechsel umfangreiche Einstellungen erforderlich, um den Arbeitspunkt der Bahnlaufregelung auf das jeweilige Material einzustellen.

Andererseits kommt es häufig vor, daß ein Fühler während des Betriebs verschmutzt, wodurch ebenfalls der Signalhub verändert und die Regelung verfälscht wird.

Aus DE-A-2 449 171 ist es bei einer photoelektrischen Bahnlaufregeleinrichtung bekannt, zusätzlich zu einer Meßlichtschranke, welche die Kante einer laufenden Materialbahn abtastet, eine weitere Lichtschranke mit einem Strahlenteiler vorzusehen, durch den der eine Teilstrahl voll auf die Materialbahn und der andere Teilstrahl nicht auf die Materialbahn geleitet wird. Die Signale der beiden Lichtschranken werden in einer Schaltung mit Differenzverstärker und Dividierer so verarbeitet, daß die mit zunehmender Transparenz der Materialbahn abnehmende Steigung der Regelkennlinie vermieden wird. Mittels eines weiteren Differenzverstärkers wird die durch die Transparenz des Materials hervorgerufene Nullpunktverschiebung der Regelkennlinie korrigiert. Die Intensitäten der beiden Lichtschranken werden dabei auf den Wert 1 entsprechend völlig durchsichtigem Material normiert, wobei der Wert 0 einem völlig undurchsichtigen Material entspricht.

Aus EP-A-0 367 368 ist eine Bahnlaufregeleinrichtung bekannt, bei der ein Selbsttest eines Fühlers durchgeführt wird, um festzustellen, ob der Fühler korrekt arbeitet, wobei die Lichtquelle des Fühlers ein- und ausgeschaltet wird und die jeweiligen Ausgangssignale des Fühlers überprüft werden. Wenn bei eingeschalteter Lichtquelle der Fühler nicht das volle Ausgangssignal liefert, dieses aber über einem vorgegebenem Grenzwert liegt, so wird eine Selbstkalibrierung durchgeführt, wobei die Fühlerverstärkung so modifiziert wird, daß das Ausgangssignal den vollen Wert erreicht. Auf diese Weise kann eine Kompensation für eine geringe Verschmutzung des Fühlers vorgenommen werden.

Der Erfindung liegt die Aufgabe zugrunde, ein Verfahren der eingangs angegebenen Art so auszubilden, daß Änderungen des zu regelnden Materials und/oder Fühlerverschmutzung in einfacher Weise kompensiert werden können.

Diese Aufgabe wird erfindungsgemäß durch die Merkmale in den Ansprüchen 1, 2 und 4 gelöst. Dadurch, daß die Verfahrensschritte programmgesteuert ablaufen, kann die erforderliche Kompensation schnell und einfach vorgenommen werden. Durch die von der Signalverarbeitungseinrichtung aufgenommenen Signale können die vorhandenen Betriebsbedingungen selbsttätig ermittelt werden, wobei durch entsprechende Berechnung in der Signalverarbeitungseinrichtung die Kompensation ebenfalls selbsttätig vorgenommen wird. Es entfallen somit bei einem Materialwechsel umständliche Neueinstellungen der Bahnlaufregelung, und es können ebenfalls Verfälschungen der ursprünglich eingestellten Bahnlaufregelung kompensiert werden, die durch Fühlerverschmutzung und/oder Änderung des Materials der Bahn auftreten können.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend anhand der Zeichnung näher erläutert. Es zeigen

Fig. 1     schematisch eine Anordnung von Fühlern beiderseits einer Materialbahn

Fig. 2     in einer graphischen Darstellung den maximalen Signalkontrast eines optischen Fühlers im Vergleich zu dem Signalkontrast, den man bei eingelegter transparenter Materialbahn erhält,

Fig. 3     in einer Darstellung entsprechend Fig. 2 einen verschmutzten Fühler,

Fig. 4     eine graphische Darstellung des erfindungsgemäßen Verfahrens, wobei zugleich eine Verschmutzung des Fühlers und die Transparenz einer zu regelnden Materialbahn kompensiert wird, und

Fig. 5     in einer weiteren graphischen Darstellung den Ablauf des erfindungsgemäßen Verfahrens vor Einsetzen der Bahnlaufregelung.

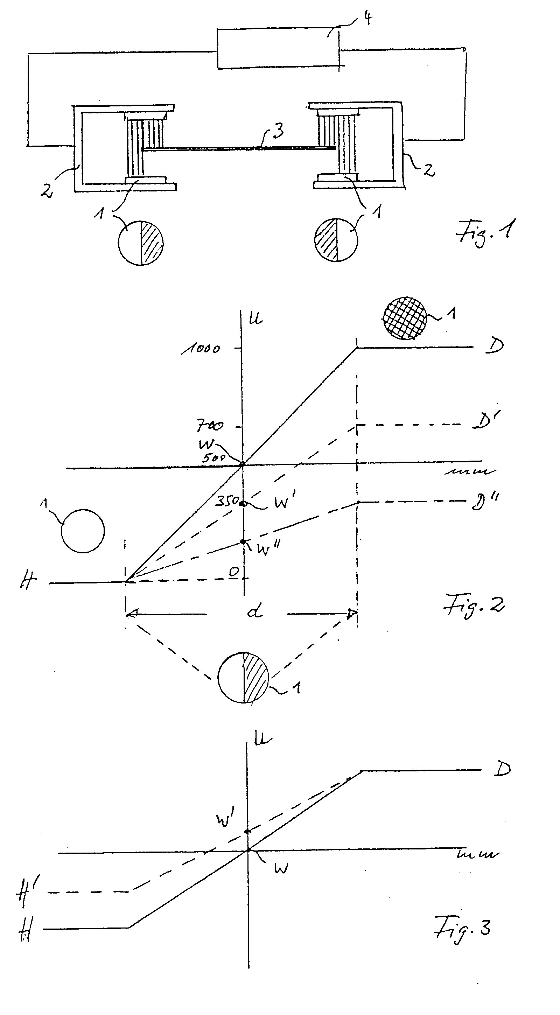

Fig. 1 zeigt in einer schematischen Darstellung kreisrunde optische Fühler 1 in einer U-förmigen, von einem nicht dargestellten Fühlerverstellgerät verstellbaren Halterung 2 beiderseits einer Materialbahn 3, wobei in dieser Darstellung die Bahnkanten die Fühler 1 jeweils zur Hälfte abdecken. Bei 4 ist schematisch eine elektronische Signalverarbeitungs- und Steuereinrichtung dargestellt, welche die Fühlersignale aufnimmt, speichert und daraus Korrekturfaktoren berechnet. Ferner wird durch diese Steuereinrichtung das nicht dargestellte Fühlerverstellgerät zum Verstellen der Halterungen 2 der Fühler gesteuert.

Fig. 2 zeigt schematisch den Signalverlauf eines Fühlers 1 mit dem Durchmesser d zwischen Hellwert H und Dunkelwert D, wobei auf der Abszisse in mm die Fühlerposition und auf der Ordinate der Spannungswert U des Fühlersignals aufgetragen ist. Der Spannungswert des Signals wird beispielsweise nach einer A/D-Wandlung von dem optischen Fühler 1 erhalten. Auf der linken Seite in Fig. 2 ist der Fühler 1 vollständig freiliegend wiedergegeben, wobei bei unverschmutztem Fühler der maximale Hellwert H erhalten wird, der beispielsweise mit U=0 wiedergegeben wird. Auf der rechten Seite der Fig. 2 ist der Fühler 1 in vollständig durch ein nicht lichtdurchlässiges Material abgedecktem Zustand wiedergegeben, wobei in diesem Falle ein maximaler Dunkelwert D bei beispielsweise U = 1000 als Fühlersignal erhalten wird. Die Strecke zwischen Hellwert H und Dunkelwert D auf der Abszisse entspricht dem Fühlerdurchmesser d. Der Mittelwert aus Hellwert H und Dunkelwert D wird bei U = 500 als Grundführungswert W = 0 für die Regelung festgelegt, der einem zur Hälfte abgedeckten Fühler entspricht.

Anstelle des Mittelwertes U = 500 zwischen U = 0 und U = 1000 kann auch ein anderer Zwischenwert als Führungswert W = 0 für die Regelung festgelegt werden.

Dieser in Fig. 2 durch ausgezogene Linien wiedergegebene maximale Signalkontrast bzw. Signalhub zwischen H = 0 und D = 1000 wird bei der ersten Inbetriebnahme der Bahnlaufregelung ermittelt oder auch nach einer abgeschlossenen Instandsetzungsmaßnahme, worauf die Optimierung der Systemverstärkung vorgenommen wird.

Wenn der Lauf einer transparenten Materialbahn 3 geregelt werden soll, so wird zunächst der erzielbare Hellwert H' bei völlig freiliegendem Fühler festgestellt, der mit dem Hellwert H = 0 der Ersteinstellung zusammenfällt, wenn der Fühler 1 nicht verschmutzt ist. Hierauf wird der Dunkelwert D' ermittelt, der sich bei dem von der transparenten Materialbahn 3 vollständig abgedecktem Fühler ergibt. Wegen der Transparenz des Materials liegt dieser Dunkelwert D' unter dem ursprünglich ermittelten maximalen Dunkelwert D beispielsweise bei D' = 700. In Fig. 2 ist dieser Signalverlauf durch eine gestrichelte Linie wiedergegeben.

Diese Ermittlung des Hell- und Dunkelwertes wird wie die Ermittlung der Hell- und Dunkelwerte bei der zuvor erwähnten Grundeinstellung durch einen in der Steuereinrichtung vorgegebenen Programmschritt ausgeführt, durch den zunächst das Fühlerverstellgerät so angesteuert wird, daß der Fühler aus der völlig frei liegenden Stellung in die voll abgedeckte Stellung oder umgekehrt verfahren wird, wie dies Fig. 5 zeigt. Hierbei wird die Änderung des Fühlersignals beobachtet, wobei der Hell- bzw. Dunkelwert daraus abgeleitet wird, daß sich das Fühlersignal während der Verstellbewegung nicht ändert, wie dies anhand von Fig. 5 erläutert wird.

Die Mittelwertbildung in der Signalverarbeitungseinrichtung zwischen H = 0 und D' = 700 ergibt einen Zwischenwert W' bei U = 350, der mit dem in der Regelung eingestellten Führungswert W bei U = 500 nicht übereinstimmt. Hierauf wird durch einen Programmschritt der Wert W' in der Signalverarbeitung so verschoben oder aufaddiert, daß dieser Wert W' auf den Grundführungswert W gebracht wird, mit dem die Bahnlaufregelung wie zuvor weiterarbeiten kann.

Erfolgt ein Materialwechsel, wobei der Bahnlauf einer anderen Materialbahn 3 mit unterschiedlicher Transparenz geregelt werden soll, so wird wiederum durch Tastendruck der beschriebene Verfahrensablauf ausgelöst, wobei der mit diesem neuen Material erzielbare Signalkontrast zwischen Hell- und Dunkelwert ermittelt wird, der beispielsweise bei etwa D" = 350 liegen kann, wie dies durch eine strichpunktierte Linie des Signalverlaufs in Fig. 2 wiedergegeben ist. Hierauf wird der neue Mittelwert W" berechnet und in der gleichen Weise auf den Grundführungswert W verschoben, worauf die Bahnlaufregelung unverändert und ohne weitere Einstellmaßnahmen ablaufen kann.

Anstelle der Verschiebung der Zwischen- bzw. Mittelwerte W' und W" auf den Grundführungswert W ist es auch möglich, den durch Transparenz des Materials reduzierten Dunkelwert D' auf das Niveau des maximalen Dunkelwertes D in der Signalverarbeitungseinrichtung anzuheben und damit den reduzierten Signalhub auf den maximalen Signalhub zu spreizen, so daß man trotz transparentem Material für die Regelung den ursprünglichen maximalen Signalhub erhält. Dies entspricht einer Verschiebung des Zwischenwertes W' auf den Grundführungswert W, wobei die Transparenz des Materials für die Regelung praktisch ungeschehen gemacht wird.

Das Verhältnis zwischen dem bei der Grundeinstellung ermittelten maximal möglichen Signalkontrast und dem vorgefundenen Signalkontrast kann als Korrekturfaktor verwendet werden, mit dem alle Systemparameter wie Verstärkung, Schaltpunkte usw. automatisch korrigiert werden.

In der Signalverarbeitungseinrichtung kann ein Minimalwert des Dunkelwertes D' vorgegeben werden, bei dessen Feststellung eine Fehlermeldung abgegeben wird, die angibt, daß der für die Bahnlaufregelung erforderliche minimale Signalkontrast nicht erreicht wird und die betreffende Materialbahn nicht geregelt werden kann.

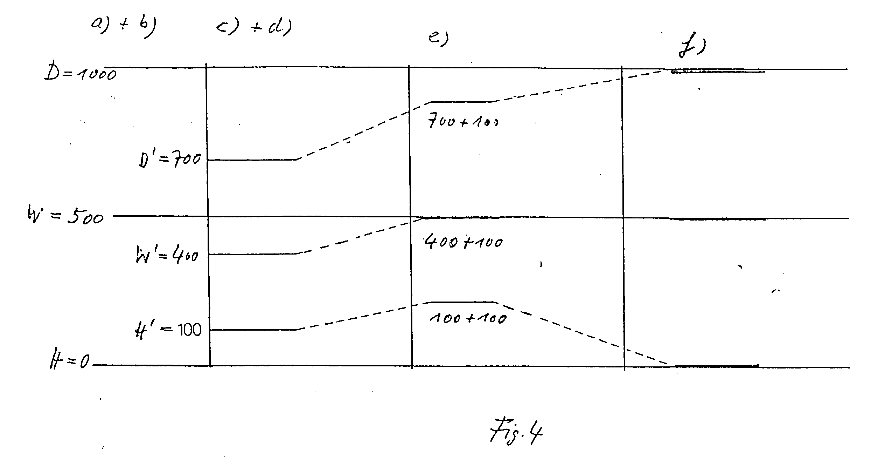

Fig. 3 zeigt einen Signalverlauf entsprechend Fig. 2, wobei eine Verschmutzung des Fühlers dadurch wiedergegeben ist, daß der - bspw. nach einer gewissen Betriebszeit - ermittelte Hellwert H' über dem ursprünglichen maximalen Hellwert H liegt. In diesem Falle kann in der gleichen Weise wie zuvor beschrieben bei einer Fühleranpassung der Zwischenwert W' auf den Grundführungswert W verschoben oder der Hellwert H' auf den ursprünglichen Hellwert H gespreizt werden.

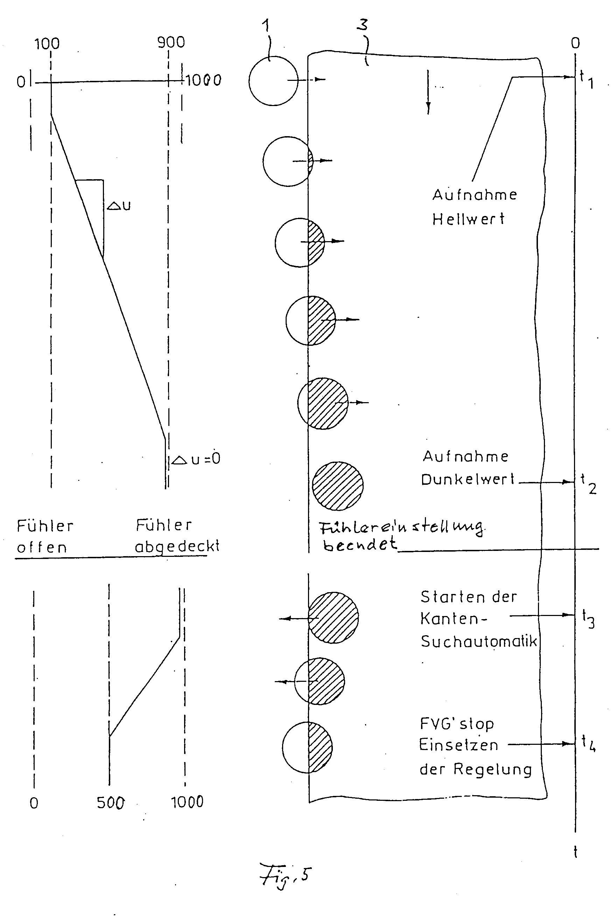

Fig. 4 zeigt den Ablauf des erfindungsgemäßen Verfahrens in einer anderen Darstellung, wobei gleichzeitig die Transparenz einer Materialbahn und die Verschmutzung des Fühlers kompensiert werden. Bei der ursprünglichen Systemeinstellung wird in einem Schritt a) der maximal erzielbare Signalkontrast zwischen H = 0 und D = 1000 bei der Erstinbetriebnahme ermittelt und auf den Mittelwert U = 500 der Grundführungswert W in einem Schritt b) festgelegt und gespeichert. Wird eine zu regelnde Materialbahn eingelegt oder liegen veränderte Betriebsbedingungen vor, so werden in einem Schritt c) der Verschmutzungsgrad des Fühlers und die Transparenz der zu regelnden Materialbahn durch Verstellen der Fühler ermittelt. Bei einem bspw. nach längerem Betrieb verschmutzten Fühler erhält man z.B. einen maximalen Hellwert H' = 100. Wird der verschmutzte Fühler durch die vorgegebene transparente Materialbahn vollständig abgedeckt, so erhält man einen Dunkelwert D' von bspw. 700. Nach dieser Ermittlung des erzielbaren Signalhubes im Schritt c) wird in dem folgenden Schritt d) der Wert W' des Fühlers durch (H' + D')/2 = 400 ermittelt. Danach wird in einem Schritt e) der so ermittelte Zwischenwert W' auf das Niveau des Grundführungswertes W bei U = 500 angehoben, wobei der unter den vorgegebenen Betriebsbedingungen erzielbare Signalhub in der gleichen Weise um den Betrag 100 (W-W') versetzt wird, so daß sich D' = 800 und H' = 200 ergibt. In einem weiteren Schritt f) werden der Hellwert H' und der Dunkelwert D' auf die ursprünglich ermittelten Grundwerte H = 0 und D = 1000 gespreizt, indem diese Werte mit dem Korrekturfaktor 1,66 multipliziert werden, der sich aus dem Verhältnis zwischen maximalem Signalkontrast ( D - H = 1000) bei Grundeinstellung und Signalkontrast ( D'- H' = 600) bei vorgegebenen Betriebsbedingungen ergibt. Durch diese Spreizung des bei vorgegebenen Betriebsbedingungen ermittelten Signalkontrastes auf den maximalen Signalkontrast der Grundeinstellung können sämtliche Systemparameter der Bahnlaufregelung unverändert beibehalten werden, wobei trotz reduziertem Signalkontrast aufgrund eines verschmutzten Fühlers und eines transparenten Materials die gleiche Genauigkeit wie bei maximalem Signalkontrast der Grundeinstellung erreicht wird.

Unterschreitet der im Schritt c) ermittelte Hellwert H' den bei der Grundeinstellung ermittelten Hellwert H des Fühlers beispielsweise um mehr als 50 %, so kann eine Verschmutzungswarnung auf einem Display der Bahnlaufregeleinrichtung abgegeben werden. Diese arbeitet aber dennoch mit dem zuvor wiedergegebenen gespreizten Signalkontrast weiter.

Zur Kompensierung des Verschmutzungsgrads des Fühlers allein ist es möglich, durch einen gesonderten Befehl der Steuereinrichtung den aktuellen Hellwert H' des Fühlers festzustellen und diesen mit dem Hellwert H der Grundeinstellung zu vergleichen. Die so ermittelte Differenz H-H' kann für den Berechnungsvorgang in der Steuereinrichtung zur Kompensation des Verschmutzungsgrads verwendet werden. Ebenso kann das Verhältnis H/H' als Korrekturfaktor verwendet werden, um z.B. das Fühlersignal zu verstärken.

Fig. 5 erläutert den erfindungsgemäßen Verfahrensablauf mit automatischer Fühlereinstellung mittels eines von der elektronischen Steuereinrichtung gesteuerten Fühlerverstellgerätes, wobei die verschiedenen Stellungen des Fühlers relativ zur Materialbahn 3 wiedergegeben sind. Durch die Schraffur der Fühlerfläche ist jeweils der Grad der Abdeckung des Fühlers 1 durch die Materialbahn 3 wiedergegeben.

Nach der Grundeinstellung mit H = 0 und D = 1000 wird später bei gegebenen Betriebsbedingungen zu einem Zeitpunkt $t_1$ der Fühler 1 aus der außerhalb der Materialbahn 3 völlig frei liegenden Stellung kontinuierlich oder schrittweise in Richtung auf die Bahnkante zu bewegt, wie durch Pfeile angedeutet, um die Bahnkante zu suchen, wobei während dieses Suchvorganges die auftretenden Signaländerungen beobachtet werden und aus dem Ausbleiben einer Signaländerung das Vorliegen des Hell- bzw. Dunkelwertes abgeleitet wird. Der letzte Hellwert vor Erreichen der Bahnkante wird gespeichert. Bei Erreichen der Bahnkante ändert sich das Fühlersignal mit einer der Transparenz und der Stellgeschwindigkeit proprotionalen Größe. Wird die Signal- bzw. Spannungsänderung $\Delta$ U wieder Null, so wird dadurch angezeigt, daß der Fühler vollständig von der Materialbahn abgedeckt ist . Der bei $\Delta$ U = 0 zum Zeitpunkt $t_2$ festgestellte Spannungswert entspricht damit dem Dunkelwert D', der wiederum gespeichert wird. Hierauf wird in der elektronischen Steuereinrichtung 4 die zuvor beschriebene Berechnung des Zwischenwerts W' und dessen Verschiebung auf den Grundführungswert W sowie die Spreizung des ermittelten Signalkontrastes auf den ursprünglichen Signalkontrast durchgeführt, worauf nach Abschluß dieser Berechnung im Zeitpunkt $t_3$ die Kantensuchautomatik dadurch startet, daß der Fühler aus der voll abgedeckten Stellung nach außen bewegt wird, bis der Fühler zum Zeitpunkt $t_4$ die Stellung erreicht, die dem Führungswert W = 0 bei U = 500 entspricht, wobei der Fühler zur Hälfte von der Materialbahn abgedeckt wird. Der Fühler wird in dieser Stellung durch Stop des Fühlerverstellgerätes angehalten, worauf die Bahnlaufregelung bei $t_4$ einsetzt.

Die Fühler rechts und links von der Materialbahn 3 werden zweckmäßigerweise einzeln in der beschriebenen Weise eingestellt, weil der Verschmutzungsgrad an den beiden Fühlern unterschiedlich sein kann. Auch bei Verwendung einer Reflektorschiene, der zwei Fühler gegenüberliegen, kann der Verschmutzungsgrad auf den beiden Seiten der Fühler unterschiedlich sein. Schließlich ist die einzelne Einstellung der beiden Fühler auch für eine Materialbahn mit unterschiedlicher Transparenz auf der linken und der rechten Seite von Vorteil. Eine solche Materialbahn, die beispielsweise aus nicht-transparentem Material auf der einen Hälfte und auf der anderen Hälfte aus transparentem Material besteht, kann mit einzeln auf die beschriebene Weise eingestellten Fühlern auf Mitte geregelt werden.

Bei gegenläufigen Fühlern, bei denen die beiden Fühler synchron gegenläufig zueinander beispielsweise über eine gemeinsame Verstellspindel mit gegenläufigen Gewinden verstellt werden, so daß ein Fühler nicht einzeln bewegt werden kann, wird das erfindungsgemäße Verfahren wie folgt abgewandelt. Zunächst führen die beiden Fühler einen Kantensuchvorgang aus, wobei sie z. B. von außerhalb der Materialbahn 3 auf diese zu bewegt werden, worauf jener Fühler, der zuerst eine Bahnkante erreicht, in der zuvor beschriebenen Weise anhand des aktuellen Hell- und Dunkelwerts und der ermittelten Korrekturfaktoren eingestellt wird. Nach diesem Einstellvorgang an diesem einen Fühler wird die automatische Bahnkantenregelung auf den eingestellten Fühler eingeschaltet. Beide Fühler werden danach weiter nach innen bewegt. Durch die Kantenregelung mit dem bereits eingestellten Fühler wird bei dessen Verstellbewegung die Bahn in Richtung auf den zweiten, noch nicht eingestellten Fühler verstellt. Da sich die beiden Fühler gegenläufig bewegen, wird die Materialbahn auf den zweiten Fühler zugeführt. Sobald dieser die Bahnkante erreicht, wird auch der zweite Fühler in der zuvor beschriebenen Weise nach Ermittlung der vorhandenen Hell- und Dunkelwerte eingestellt. Nach der Einstellung des zweiten Fühlers wird dieser so positioniert, daß seine Mitte mit der Bahnkante fluchtet. Nachdem die beiden Fühler in dieser Weise eingestellt sind, wird die automatische Mittenregelung eingeschaltet.

Bei Maschinen, auf denen im 24-Stunden-Betrieb kontinuierlich die Produktion läuft, besteht keine Möglichkeit, die beschriebene Fühlereinstellung während der kontinuierlich laufenden Bahnregelung durchzuführen, weil für die Fühlereinstellung eine gesonderte Bewegung des Fühlers auf die Bahnkante zu und von dieser weg erforderlich ist.

Um dennoch den Verschmutzungsgrad der Fühler überprüfen und eine automatische Verschmutzungskompensation durchführen zu können, wird in vorgegebenen Zeitabständen die Bahnkantenregelung abgeschaltet bzw. verriegelt, so daß für eine kurze Zeit die Materialbahn ungeregelt in der Maschine läuft. Während dieser in der Signalverarbeitungseinrichtung vorgegebenen Unterbrechungszeit der Bahnkantenregelung können die Fühler von der Bahn weg und wieder auf diese zu bewegt werden, so daß die zuvor beschriebenen Einstellungsvorgänge ausgeführt werden können. Nach Feststellung der jeweiligen Hell- und Dunkelwerte wird der Fühler wieder auf Mitte Bahnkante positioniert, wie dies in Fig. 4 bei $t_4$ wiedergegeben ist, worauf die unterbrochene Regelung wieder eingeschaltet werden kann.

Da das erfindungsgemäße Fühlereinstellverfahren durch eine elektronische Steuereinrichtung sehr schnell ausgeführt werden kann, bedarf es nur einer kurzzeitigen Unterbrechung der Bahnlaufregelung, um eine automatische Verschmutzungskompensation oder auch eine Neueinstellung auf unterschiedliche Transparenz des Materials vornehmen zu können.

Bei einer Bahnlaufregelung mit unabhängig voneinander bewegbaren Fühlern ist es auch möglich, die Bahnlaufregelung mit einem der beiden Fühler weiterlaufen zu lassen, während der andere Fühler in der beschriebenen Weise eingestellt wird, worauf die Bahnlaufregelung auf den neu eingestellten Fühler umgeschaltet und der andere Fühler neu eingestellt wird, worauf die Bahnlaufregelung mit beiden Fühlern wieder weiterlaufen kann.

Anstelle der Aufnahme des momentanen Hellwerts und des Vergleichs mit dem ursprünglichen Hellwert für eine automatische Verschmutzungskompensation und gegebenenfalls der Einbeziehung des momentanen Dunkelwerts für die Anpassung an veränderte Transparenz der Materialbahn ist es nach einem weiteren Aspekt der Erfindung auch möglich, lediglich die Änderungsgeschwindigkeit des Signals zwischen Hell- und Dunkelwert bei während der Verstellbewegung des Fühlers gegebenen Betriebsbedingungen festzustellen und mit der Änderungsgeschwindigkeit des Signals zu vergleichen, die bei der ersten Inbetriebnahme festgestellt wurde. Aus dem Vergleich der früheren Änderungsgeschwindigkeit mit der augenblicklich vorgefundenen Änderungsgeschwindigkeit kann ein Faktor zur Kompensation der Fühlerverschmutzung ermittelt werden. Wie aus Fig. 3 ersichtlich, ergibt sich bei einem verschmutzten Fühler eine andere Neigung der Verbindungslinie zwischen Hell- und Dunkelwert, so daß aus der Steigung dieser Kurve ein Korrekturfaktor für die Verschmutzungskompensation abgeleitet werden kann.

Bei diesem Verfahren der Verschmutzungskompensation in Abhängigkeit von der Änderungsgeschwindigkeit des Fühlersignals ist es bei einer Bahnmittenregelung nicht erforderlich, die Bahnlaufregelung zu unterbrechen, weil durch das kurzzeitige Verstellen der Fühler lediglich eine scheinbare Bahnbreitenänderung auftritt, die auf den Führungswert keinen Einfluß hat. Auch in diesem Falle werden die Fühler nach Abschluß der Ermittlung des Verschmutzungsgrades auf ihre vorhergehende Position zurückgestellt.

Bei diesem Verfahren ist es nicht erforderlich, den vollen Hell- oder Dunkelwert anzufahren, weil durch Verstellen des Fühlers über einen Teilbereich zwischen Hell- und Dunkelwert bereits die Steigung der Signalkurve bzw. die Änderungsgeschwindigkeit des Signals festgestellt werden kann.

Dieses Verfahren der automatischen Verschmutzungskompensation anhand der Änderungsgeschwindigkeit des Signals kann auch an einem einzelnen Fühler vorgenommen werden, es ist nicht auf zwei Fühler bei der Mittenregelung einer Materialbahn beschränkt.

Für die Durchführung des erfindungsgemäßen Verfahrens wird zweckmäßigerweise ein Bedienungsfeld für die Bahnlaufregelung vorgesehen, wobei für die einzelnen notwendigen Bedienungsvorgänge, wie z.B.

Fühler-Abdecken und Fühler-Freimachen, Bedieneranzeigen wie Leuchtdioden oder LCD-Anzeigen vorgesehen werden, um durch Steuerung von außen eine Fühlereinstellung vorzunehmen, sofern diese nicht automatisch abläuft.

Bei der obigen Beschreibung des erfindungsgemäßen Verfahrens wurde der Führungswert W bzw. der Arbeitspunkt der Bahnlaufregelung jeweils auf den Mittelwert zwischen Hell- und Dunkelwert eingestellt, der der Mitte des Fühlerdurchmessers entspricht. Es ist aber auch möglich, eine Versetzung des Führungswertes W beispielsweise um 10% nach links oder rechts von der Mitte des Fühlers vorzusehen, wenn beispielsweise die Bahnkante anders geführt werden soll. In diesem Falle würde der Führungswert W + 10% wie ein Zwischenwert W' auf den ursprünglichen Führungswert W z. B. durch Addition oder Substraktion verschoben, so daß wieder der volle Meßbereich zur Verfügung steht, der dem Durchmesser d des Fühlers entspricht.

Das erfindungsgemäße Verfahren ist nicht nur für optische Fühler geeignet, sondern auch für andere Arten von Fühlern, wie z.B. pneumatische, induktive akustische und dgl. Fühler, wobei jeweils der Hellwert dem Signalwert bei freiliegendem Fühler und der Dunkelwert dem Signalwert bei abgedecktem Fühler entspricht. Z.B. bei einem pneumatischen Fühler, der üblicherweise mit einem Filter versehen ist, kann eine Verschmutzung des Filters auftreten, die einer Hellwertreduzierung entspricht und zu einer Einengung des Signalkontrastes führt. Sie kann in der gleichen Weise wie oben beschrieben kompensiert werden.

Das erfindungsgemäße Verfahren der Kompensation des durch veränderte Betriebsbedingungen geänderten Führungswertes bzw. Hell- und Dunkelwertes durch eine elektronische Signalverarbeitungseinrichtung kann auch in der Weise ausgeführt werden, daß beispielsweise durch Tastendruck das Programm für die Fühlereinstellung aktiviert und danach ein Bahnmaterial in den Fühler eingeführt und wieder herausgenommen wird, wobei die Signalverarbeitungseinrichtung den Hell- und Dunkelwert feststellt und die Berechnung des Führungswertes bzw. Korrektur des Führungswertes oder des Hell- bzw. Dunkelwertes ausführt. Vorzugsweise wird hierfür ein Fühlerverstellgerät verwendet.

**Patentansprüche**

1. Verfahren zum programmgesteuerten Einstellen eines die Bahnkante einer laufenden Materialbahn (3) berührungsfrei erfassenden, senkrecht zur Bahnkante verfahrbaren Fühlers (1) für eine Bahnlaufregeleinrichtung, wobei in einem Ausgangszustand der Bahnlaufregeleinrichtung die durch den Fühler maximal erzielbare Signaländerung zwischen vollständig freiliegendem und durch Verschmutzung nicht gestörtem Fühler und von einem nicht transparenten bzw. nicht durchlässigen Material vollständig abgedecktem Fühler ermittelt und ein Zwischenwert dieser maximalen Signaländerung als Grundführungswert (W) für die Bahnlaufregelung festgesetzt und in einer elektronischen Signalverarbeitungseinrichtung abgespeichert wird, wobei bei abgeschalteter Bahnlaufregelung die Signaländerung mittels der elektronischen Signalverarbeitungseinrichtung (4) dadurch festgestellt wird, daß vom Ausbleiben einer Signaländerung bei einer Relativbewegung zwischen Fühler und Materialbahn die Endwerte der erzielbaren Signaländerung abgeleitet werden, daraus der Zwischenwert berechnet und abgespeichert wird, und im praktischen Einsatz der Bahnlaufregeleinrichtung, wenn der Fühler durch Verschmutzung gestört ist und/oder eine andere Materialbahn überwacht werden soll, die erzielbare Signaländerung zwischen freiliegendem Fühler und von der betreffenden Materialbahn vollständig abgedecktem Fühler bei abgeschalteter Bahnlaufregelung festgestellt und gespeichert wird, worauf der entsprechende Zwischenwert (W') der so ermittelten Signaländerung berechnet und mit dem ursprünglich vorgegebenen Grundführungswert (W) verglichen wird, und der zuletzt erhaltene Zwischenwert (W') für die weitere Bahnlaufregelung in der elektronischen Signalverarbeitungseinrichtung (4) durch einen Korrekturfaktor auf den Grundführungswert (W) verschoben wird.

2. Verfahren zum programmgesteuerten Einstellen eines die Bahnkante einer laufenden Materialbahn (3) berührungsfrei erfassenden, senkrecht zur Bahnkante verfahrbaren Fühlers (1) für eine Bahnlaufregeleinrichtung, wobei in einem Ausgangszustand der Bahnlaufregeleinrichtung die durch den Fühler maximal erzielbare Signaländerung zwischen vollständig freiliegendem und durch Verschmutzung nicht gestörtem Fühler und von einem nicht transparenten bzw. nicht durchlässigen Material vollständig abgedecktem Fühler festgestellt wird und die Endwerte der Signaländerung in einer elektronischen Signalverarbeitungseinrichtung (4) als Grundwerte (H,D) abgespeichert werden, wobei bei abgeschalteter Bahnlaufregelung durch die elektronische Signalverarbeitungseinrichtung (4) die Endwerte der Signaländerung vom Ausbleiben einer Signaländerung bei einer Relativbewegung zwischen Fühler und Materialbahn abgeleitet und gespeichert werden, und im praktischen Einsatz der Bahnlaufregeleinrichtung, wenn der Fühler durch Verschmutzung gestört ist und/oder eine andere Materialbahn überwacht werden soll, die erzielbare Signaländerung zwischen freiliegendem Fühler und von der betreffenden Materialbahn vollständig abgedecktem Fühler bei abgeschalteter Bahnlaufregelung festgestellt und gespeichert wird,
worauf die ermittelten Endwerte (H',D') der Signaländerung mit den ursprünglich vorgegebenen Endwerten (H,D) verglichen und bei Auftreten einer Differenz die zuletzt ermittelten Endwerte (H',D') durch einen Korrekturfaktor auf die Grundwerte (H,D) korrigiert bzw. verschoben werden.

3. Verfahren nach den Ansprüchen 1 und 2,
wobei die elektronische Signalverarbeitungseinrichtung (4) ein Fühlerverstellgerät ansteuert, durch das der Fühler (1) quer zur Bahnkante bewegt wird, und vom Ausbleiben einer Signaländerung während der Verstellbewegung des Fühlers die Endwerte (H',D') der Signaländerung abgeleitet und gespeichert werden.

4. Verfahren zum programmgesteuerten Einstellen eines die Bahnkante einer laufenden Materialbahn (3) berührungsfrei erfassenden Fühlers (1) für eine Bahnlaufregeleinrichtung,
wobei der Fühler durch ein Fühlerverstellgerät senkrecht zur Bahnkante verfahrbar ist,
das durch eine elektronische Signalverarbeitungseinrichtung (4) zum Ausführen der Verstellbewegung angesteuert wird,
wobei in einem Ausgangszustand der Bahnlaufregeleinrichtung die Signalverarbeitungseinrichtung (4) die vom Fühler (1) während der Verstellbewegung abgegebenen Signale überwacht und daraus die Geschwindigkeit der Signaländerung zwischen freiliegendem und durch Verschmutzung nicht gestörtem Fühler und von einem nicht transparenten bzw. nicht durchlässigen Material abgedecktem Fühler feststellt,
und im praktischen Einsatz der Bahnlaufregeleinrichtung, wenn der Fühler durch Verschmutzung gestört ist und/oder eine andere Materialbahn überwacht werden soll, der gleiche Vorgang wiederholt und die dabei ermittelte Geschwindigkeit der Signaländerung mit dem ursprünglich erhaltenen Wert der Signaländerung verglichen wird,
und
aus einer Differenz zwischen der ursprünglichen und der im praktischen Einsatz ermittelten Signaländerungsgeschwindigkeit ein Korrekturfaktor für die weitere Bahnlaufregelung abgeleitet wird.

5. Verfahren nach den vorhergehenden Ansprüchen,
wobei die Bahnlaufregelung kurzzeitig unterbrochen bzw. blockiert wird und wahrend ausgeschalteter Bahnlaufregelung die Fühlereinstellung vorgenommen wird.

6. Verfahren nach den vorhergehenden Ansprüchen,
wobei im Falle von gekoppelten, gegenläufig synchron bewegten Fühlern (1) die Fühlereinstellung zuerst an jenem Fühler vorgenommen wird, der als erster eine Bahnkante erreicht, worauf nach Einstellung dieses Fühlers die Bahnlaufregelung mit diesem Fühler eingeschaltet wird und der zweite Fühler bei Erreichen der zugeordneten Bahnkante durch Ermitteln der Signaländerung in der gleichen Weise eingestellt wird, worauf die Bahnlaufregelung mit den so eingestellten Fühlern aufgenommen wird.

7. Verfahren nach den vorhergehenden Ansprüchen,
wobei eine Fehlermeldung abgegeben wird, wenn bei der Ermittlung eines Endwertes (H',D') der Signaländerung oder der Größe der Signaländerung (D' - H') der Wert unter einem vorgegebenen Grenzwert liegt.

## Claims

1. A process for program-controlled adjustment of a sensor (1) for a web movement control device, this sensor effecting contactless detection of the edge of a moving web of material (3) and being moveable perpendicular to the edge of the web, wherein in an initial state of the web movement control device, the maximum attainable change in the sensor's signal between being fully-exposed and not affected by soiling and being completely covered by non-transparent or non-permeable material is detected, an intermediate value for this maximum signal change is fixed as a basic guiding value (W) for the web movement control and is stored in an electronic signal processing apparatus, wherein with the web movement control being switched off, the signal change is determined by the electronic signal processing apparatus (4) in such a way that in the absence of a signal change with a relative movement between the sensor and the web of material, the end values of the attainable signal change are derived, from which the intermediate value is calculated and stored, and during practical operation of the web movement control device, when the sensor is affected by soiling and/or another web of material is to be monitored, the attainable signal change between the exposed sensor and the sensor which is completely covered by the respective web of material is detected and stored with the web movement control being switched off, whereupon the corresponding intermediate value (W') of the signal change which was detected in this way is calculated and compared with the originally-specified basic guiding value (W), and the last obtained intermediate value (W') is altered by a correction factor to the basic guiding value (W) for further web movement control in the electronic signal processing apparatus (4).

2. A process for program-controlled adjustment of a sensor (1) for a web movement control device, this sensor effecting contactless detection of the edge of a moving web of material (3) and being moveable perpendicular to the edge of the web, wherein in an initial state of the web movement control device, the maximum attainable change in the sensor's signal between being fully-exposed and not affected by soiling and being completely covered by non-transparent or non-permeable material is detected, and the end values of the signal change are stored in an electronic signal processing apparatus (4) as basic values (H, D) in such a way that in the absence of signal change by the signal processing apparatus (4) with a relative movement between the sensor and the web of material, the end values of the signal change are derived and stored, and during practical operation of the web movement control device, when the sensor is affected by soiling and/or another web of material is to be monitored, the attainable signal change between the sensor being exposed and the sensor being completely covered by the respective web of material is detected and stored with the web movement control being switched off, whereupon the detected end values (H', D') of the signal change are compared with the originally-specified end values (W), and on occurrence of a difference, the last obtained end values (H, D') are altered by a correction factor to the basic values (H, D).

3. A process according to claims 1 and 2, wherein the electronic signal processing apparatus (4) controls a sensor adjustment apparatus via which the sensor (1) is moved transversely with regard to the edge of the web, and in the absence of a signal change during the sensor's adjustment movement, the end values (H', D') of the signal change are derived and stored.

4. A process for program-controlled adjustment of a sensor (1) for a web movement control device, this sensor effecting contactless detection of the edge of a moving web of material (3) and being moveable perpendicular to the edge of the web by means of a sensor adjustment apparatus, which is controlled by an electronic signal processing apparatus (4) for execution of the adjustment movement, wherein in an initial state of the web movement control device, the signal processing apparatus (4) monitors the signals given off during the adjustment movement and determines the speed of the signal change between the sensor being exposed and not affected by soiling and the sensor being covered by non-transparent or non-permeable material, and in practical use of the web movement control device, when the sensor is affected by soiling and/or another web of material is to be monitored, the same process is repeated and the thus-determined speed of the signal change is compared with the value obtained for the original signal change, and a correction factor is derived for further web movement control from the difference between the original signal change speed and the signal change speed which was determined during practical use.

5. A process according to the preceding claims, wherein the web movement control is briefly interrupted or stopped, the sensor adjustment being carried out whilst the web movement control is switched off.

6. A process according to the preceding claims, wherein in the case of coupled, countercurrently synchronous moving sensors (1), sensor adjustment is firstly carried out on the sensor which first reaches an edge of the web, where after setting of this sensor, web movement control is switched on and the second sensor is set in the same way when it reaches the allocated edge of the web by detection of the signal change, whereupon web movement control is undertaken with the sensors which have been set in this way.

7. A process according to the preceding claims, wherein an error message is produced if, when determining an end value (H', D'), the signal change or the size of the signal change (D' - H') of the value lies below a specified threshold value.

**Revendications**

1. Procedé pour régler, d'une manière commandée par programme, un capteur (1) qui détecte sans contact le bord d'une bande de matériau circulante (3) et est déplaçable perpendiculairement au bord de la bande, pour un dispositif de régulation de circulation d'une bande,
selon lequel dans un état initial du dispositif de régulation de circulation de la bande, la variation d'un signal, pouvant être produite au maximum par le capteur, entre le capteur entièrement libéré et non perturbé par un salissement et le capteur complètement recouvert par un matériau non transparent ou non translucide, est déterminée et une valeur intermédiaire de cette variation maximale du signal est fixée en tant que valeur de guidage de base (W) pour la régulation de circulation de la bande et est mémorisée dans un dispositif de traitement électronique du signal,
selon lequel, alors que le dispositif de régulation de circulation de la bande est débranché, la variation du signal est fixée au moyen du dispositif de traitement électronique du dispositif (4) de traitement électronique du signal par le fait que les valeurs finales de la variation pouvant être obtenue du signal sont dérivées de l'absence d'une variation du signal dans le cas d'un déplacement relatif entre le capteur et la bande de matériau, et qu'à partir de là, la valeur intermédiaire est calculée et mémorisée, et

dans le cas de l'utilisation pratique du dispositif de régulation de circulation de la bande, lorsque le capteur est perturbé par un salissement et/ou qu'une autre bande de matériau doit être contrôlée, la variation pouvant être obtenue du signal entre le capteur libéré et le capteur complètement recouvert par la bande de matériau considérée, est déterminée et mémorisée alors que le dispositif de régulation de circulation de la bande est débranché,

à la suite de quoi la valeur intermédiaire correspondante (W') de la variation ainsi déterminée du signal est calculée et est comparée à la valeur pilote de base (W) prédéterminée à l'origine, et la valeur intermédiaire (W') obtenue en dernier lieu est décalée, par un facteur de correction, vers la valeur de pilote de base (W) dans l'unité (4) de traitement électronique du signal.

2. Procédé pour le réglage, commandé par programme, d'un capteur (1) détectant sans contact le bord d'une bande circulante de matériau (3) et déplaçable perpendiculairement au bord de la bande, pour un dispositif de régulation de circulation de la bande,

selon lequel dans un état initial du dispositif de régulation de circulation de la bande, la variation d'un signal, qui peuvent être fournies au maximum par le capteur, entre le capteur complètement libéré et non perturbé par un salissement et le capteur complètement recouvert par un matériau non transparent ou non translucide, est déterminé et les valeurs finales de la variation du signal sont mémorisées en tant que valeurs de base (H, D) dans un dispositif (4) de traitement électronique du signal,

selon lequel, alors que le dispositif de régulation de circulation de la bande est débranché, les valeurs finales de la variation du signal sont dérivées, par le dispositif (4) de traitement électronique du signal, de l'absence d'une variation du signal dans le cas d'un déplacement relatif entre le capteur et la bande de matériau et sont mémorisées, et

lors de l'utilisation pratique du dispositif de régulation de circulation de la bande, lorsque le capteur est perturbé par un salissement et/ou qu'une autre bande de matériau doit être contrôlée, la variation pouvant être obtenue du signal entre le capteur libéré et le capteur complètement recouvert par la bande de matériau considérée, est déterminée et mémorisée alors que le système de régulation de circulation de la bande est débranché,

à la suite de quoi les valeurs finales déterminées (H', D') de la variation du signal sont comparées aux valeurs finales (H, D) prédéterminées initialement et, lors de l'apparition d'une différence, les valeurs terminales (H', D') déterminées en dernier lieu sont corrigées ou décalées d'un facteur de correction en direction des valeurs de base (H, D).

3. Procédé selon les revendications 1 et 2, selon lequel le dispositif (4) de traitement électronique du signal commande un appareil de déplacement du capteur, au moyen duquel le capteur (1) est déplacé transversalement par rapport au bord de la bande, et les valeurs finales (H', D') de la variation du signal sont dérivées de l'absence d'une variation du signal pendant le mouvement de déplacement du capteur et sont mémorisées.

4. Procédé pour réaliser le réglage, commandé par un programme, d'un capteur (1) détectant sans contact le bord d'une bande circulante de matériau (3), pour un dispositif de régulation de circulation d'une bande,

selon lequel le capteur est déplaçable au moyen d'un appareil de déplacement du capteur, perpendiculairement au bord de la bande,

qui est commandé par un dispositif (4) de traitement électronique du signal pour l'exécution du mouvement de déplacement,

selon lequel dans un état initial du dispositif de régulation de circulation de la bande, le dispositif (4) de traitement du signal contrôle les signaux délivrés par le capteur (1) pendant le mouvement de déplacement et détermine, à partir de là, la vitesse de la variation du signal entre un capteur libéré et non perturbé par un salissement et un capteur recouvert d'un matériau non transparent ou non translucide, et

lors de l'utilisation pratique du dispositif de régulation de circulation de la bande, lorsque le capteur est perturbé par un salissement et/ou qu'une autre bande de matériau doit être contrôlée, le même processus est répété et la vitesse alors déterminée de la variation du signal est comparée à la valeur obtenue initialement de la variation du signal, et

un facteur de correction pour la poursuite de la régulation la circulation de la bande est dérivé d'une différence entre la vitesse initiale de variation du signal et la vitesse de variation du signal déterminée lors de l'utilisation pratique.

5. Procédé selon les revendications précédentes, selon lequel le système de régulation de circulation de la bande est arrêté ou bloqué pendant un bref intervalle de temps et le réglage du capteur est exécuté pendant l'arrêt du système de régulation de circulation de la bande.

6. Procédé selon l'une des revendications précédentes, selon lequel dans le cas de capteurs (1) couplés et déplacés d'une manière synchrone en des sens opposés, le réglage des capteurs est tout d'abord réalisé au niveau du capteur qui atteint le premier un bord de la bande, à la suite de quoi, après le réglage de ce capteur, le dispositif de régulation de la circulation de la bande est activé avec ce capteur, et le second capteur est réglé de la même manière que lorsque le bord associé de la bande est atteint, par détermination de la variation du signal, à la suite de quoi le dispositif de régulation de circulation de la bande est activé avec les capteurs ainsi réglés.

7. Procédé selon les revendications précédentes, selon lequel une signalisation d'erreur est délivrée lorsque, lors de la détermination d'une valeur finale (H', D') de la variation du signal ou de la grandeur de la variation (D' - H') du signal, cette valeur est inférieure à une valeur limite prédéterminée.

Fig. 1

Fig. 2

Fig. 3

EP 0 555 853 B1

a) + b)   c) + d)        e)          f)

$D = 1000$

$D' = 700$

$W = 500$

$W' = 400$

$H' = 100$

$H = 0$

700 + 100

400 + 100

100 + 100

Fig. 4

Fig. 5